Europäisches Patentamt

European Patent Office

Office européen des brevets

(19)

(11) Veröffentlichungsnummer: **0 022 542**
**B1**

(12) # EUROPÄISCHE PATENTSCHRIFT

(45) Veröffentlichungstag der Patentschrift:
**27.07.83**

(51) Int. Cl.³: **B 22 D 11/126**

(21) Anmeldenummer: **80103885.2**

(22) Anmeldetag: **08.07.80**

(54) **Anlage zum Längsteilen einer aus einer Stranggiessanlage austretenden heissen Bramme.**

(30) Priorität: **11.07.79 DE 2927944**

(43) Veröffentlichungstag der Anmeldung:
**21.01.81 Patentblatt 81/3**

(45) Bekanntmachung des Hinweises auf die Patenterteilung:
**27.07.83 Patentblatt 83/30**

(84) Benannte Vertragsstaaten:
**AT BE FR GB IT LU NL SE**

(56) Entgegenhaltungen:
**DE-A-2 548 497**
**DE-A-2 805 022**

(73) Patentinhaber: **MDS Mannesmann Demag Sack GmbH,
Wahlerstrasse 2, D-4000 Düsseldorf-Rath (DE)**

(72) Erfinder: **Sack, Ernst Theodor, Dr. Ing., Bellscheider
Weg 29, D-4030 Ratingen 6 (DE)**

(74) Vertreter: **Boecker, Carl Otto, Dipl.-Ing., Ensheimer
Strasse 48, D-6670 St.Ingbert-Saar (DE)**

EP 0 022 542 B1

# Anlage zum Längsteilen einer aus einer Stranggießanlage austretenden heißen Bramme

Die Erfindung betrifft eine Anlage zum Längsteilen einer aus einer Stranggießanlage austretenden und auf einem Rollgang ablaufenden heißen Bramme. Bisher wurden zum Längsteilen von Stranggußbrammen Brennschneideinrichtungen benutzt (DE-AS 2 710 564), obwohl die Nachteile des Brennschneidens gegenüber den Sägen auf der Hand liegen. Diese Nachteile bestehen bekanntermaßen darin, daß der relativ breite Brennschneidschnitt Materialverlust bedeutet und zur Ausbildung von sog. Brenn- oder Schlackenbärten an der Unterseite der Brammen führt, die vor dem Auswalzen der Bramme wieder entfernt werden müssen.

Wollte man zur Vermeidung dieser Nachteile auf die Sägetechnik zurückgreifen, so bietet sich zunächst die zum Unterteilen von heißem Walzgut gebräuchliche Heißeisen-Schlittensäge an, die mit einer Kreissäge arbeitet. Da aber in der Anwendung einer solchen Warmsäge zum Längsteilen von Stranggußbrammen sehr große Kreissägen-Durchmesser vorgesehen werden müßten, um die Lager für die Kreissäge wegen der hohen Wärmebelastung auf einen genügend großen Abstand von der hitzestrahlenden Brammenoberfläche zu bringen, wurde das Sägeblatt aus Stabilitätsgründen so dick, daß der Materialverlust etwa der gleiche bleiben würde wie beim Brennschneiden. Außerdem wäre für die Aufnahme einer Warmsäge zum Längsteilen heißer Brammen ein torähnlicher Überbau im Rollgangsbereich erforderlich, dessen waagerechte Tragkonstruktion in der Mitte aufgeschnitten sein müßte. Die Anlage würde unverhältnismäßig teuer, besonders wenn man aus Sicherheitsgründen mehr als eine Warmsäge vorsehen wollte, da heute beim Sequenzguß von Stranggießanlagen lange Zeiten ununterbrochenen Gusses erreichbar sind.

In Lösung der gestellten Aufgabe, Stranggußbrammen zur Vermeidung des Brennschneidschnittes durch Sägen längs zu teilen, wird gemäß der Erfindung der Bandsägenschnitt ausgewählt mit der Maßgabe, daß die Anlage zum Längsteilen zwei oder mehr in Vorschubrichtung der Bramme hintereinander angeordnete Bandsägemaschinen umfaßt, jeweils mit einem C-förmigen, einhüftigen Ständer, an dem mindestens drei Bandsägen-Führungsrollen fliegend gelagert sind, von denen eine angetrieben ist, wobei die Ständer auf quer zum Brammenvorschub verlaufenden Führungen ruhen, die so lang ausgeführt sind, daß die Bandsägemaschinen zum Sägenwechsel bis außerhalb des Rollganges verschiebbar sind. Die einhüftige Bauart der Ständer im Verein mit der Anordnung von mindestens drei Führungsrollen für die Bandsäge erlaubt es, den senkrecht verlaufenden Trum der Bandsäge auf die Mitte auch breitester Brammen einzustellen. Es kann bei geeigneter Wahl des Werkstoffes für die Metallbandsäge mit großer Schnittgeschwindigkeit gearbeitet werden, weil die Schnittgeschwindigkeit einer Bandsäge im Gegensatz zur Warmsäge mittels Kreissägeblatt keinen Einfluß auf eine aus Stabilitätsgründen erforderliche Mindestdicke des Sägeblattes hat. Mit der hohen Schnittgeschwindigkeit wird auch die Wärmebelastung der Bandsäge verringert, die im übrigen bei ihrem Umlauf wirksam gekühlt werden kann. Die Mehrfachanordnung mehrerer Bandsägemaschinen hintereinander, die beim Beginn einer Stranggußsequenz alle auf die gleiche Schnittlinie fluchtend eingestellt werden, stellt sicher, daß beim Riß der Bandsäge der vordersten Bandsägemaschine die nächstfolgende Bandsägemaschine sofort zum Einsatz kommt, usw.

Da die Bandsägemaschinen ohnehin beim Gießbetrieb in fluchtende Lage gesteuert sind, wird empfohlen, daß alle Ständer der Bandsägemaschinen eine gemeinsame Grundplatte haben, so daß nicht jeder Ständer mit einem eigenen Verschiebeantrieb versehen sein muß.

Wenn eine Bandsäge reißt, bleibt häufig ein Ende der Bandsäge im Material stecken, da der Reibantrieb der Bandsäge mit dem Riß momentan wegfällt. Um ein solches steckengebliebenes Ende einer Bandsäge zu entfernen, sieht die Erfindung vor, daß die Bandsägen an beiden Kanten gleichartige Verzahnungen tragen und jede Bandsägenmaschine in umgekehrter Richtung angetrieben ist wie die unmittelbar vorhergehende Bandsägemaschine. Hierdurch wird erreicht, daß — wenn ein steckengebliebenes Bandsägenende sich mit der kontinuierlich vorgeschobenen Bramme dem Bereich der nächsten Bandsäge nähert — zwei entgegengesetzt gerichtete Verzahnungen aufeinandertreffen und die nächstfolgende Bandsäge das steckengebliebene Sägenende aus der Trennfuge der Bramme herausreißt.

In der Zeichnung ist ein Ausführungsbeispiel einer Anlage zum Längsteilen von Stranggußbrammen während des Sequenzgießens gemäß der Erfindung dargestellt, und zwar zeigt

Fig. 1 eine Bandsägemaschine in Schneidposition und in Ansicht, im Schnitt nach der Linie I-I in Fig. 2,

Fig. 2 eine Draufsicht auf die Anlage, und

Fig. 3 die vergrößerte Darstellung eines Details.

Auf einem mit den Kammrollen 1 ausgerüsteten Rollgang gelangt eine heiße Stranggußbramme 2 vor oder nach dem Querteilen in den Bereich der Längsteilanlage, die im Ausführungsbeispiel aus 4 in Vorschubrichtung der Bramme hintereinander angeordneten Bandsägemaschinen 3 besteht. Jede Bandsägemaschine hat einen C-förmigen, einhüftigen Ständer 4, an dem drei Führungsrollen 5, 6 und 7 zur Führung der Bandsäge 8 fliegend gelagert sind. Die Rolle 5 ist über einen Flanschmotor 9 angetrieben. Die unter der Rolle 6 angeordnete Rolle 7 ist als Spannrolle ausgebildet und zum Auflegen der Bandsäge 8 auf die fliegend gelagerten Führungsrollen in der Höhe verstellbar.

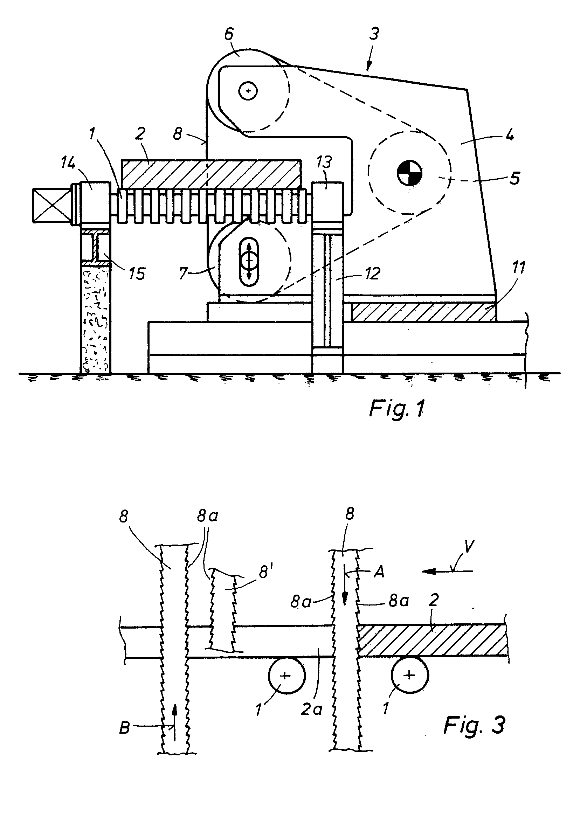

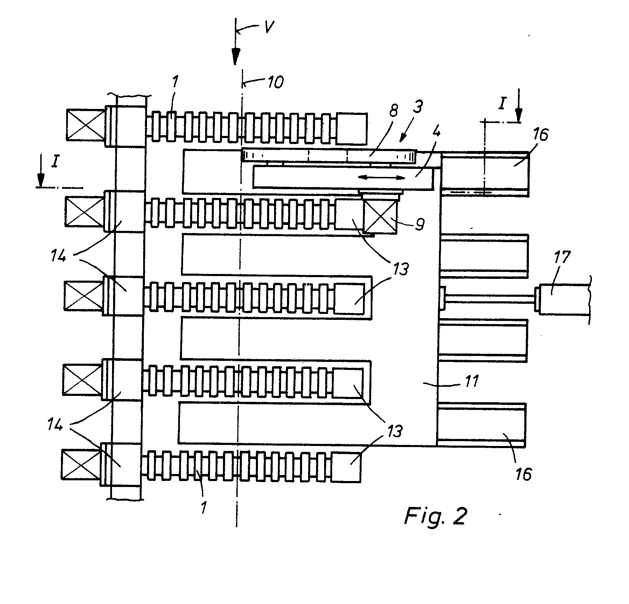

In der Draufsicht nach Fig. 2 ist nur eine der vier Bandsägemaschinen 3 dargestellt, nämlich die in Vorschubrichtung V der hier nicht dargestellten Bramme vorderste Bandsägenmaschine, die mit dem senkrecht verlaufenden Trum der Bandsäge 8 auf die Schnittlinie 10 zum Längsteilen einer Stranggußbramme eingestellt ist. Da in Fig. 2 die übrigen drei aufeinanderfolgenden Bandsägemaschinen nicht dargestellt sind, erkennt man eine gemeinsame Grundplatte 11 für alle Bandsägemaschinen. Diese Grundplatte 11 ist zinkenförmig ausgebildet, und zwar mit Rücksicht auf die senkrecht verlaufenden Einzelstützen 12 für die Lager 13 der Rollgangsrollen 1 im Bereich der Längsteilanlage (Fig. 1). Die Lager 14 der Rollgangsrollen auf der anderen Seite des Rollganges können wie bekannt über einen durchlaufenden Unterzug 15 abgestützt sein.

Die gemeinsame Grundplatte 11 für alle zwischen aufeinanderfolgenden Rollgangsrollen 1 zum Einsatz kommenden Bandsägemaschinen 3 ruht auf vier quer zum Brammenvorschub V verlaufenden Führungsbetten 16 und ist über einen hydraulischen Stellantrieb 17 zwischen der in Fig. 2 dargestellten Wirklage und einer zurückgezogenen Stellung, in der alle Bandsägemaschinen 3 außerhalb des Rollgangsbereiches liegen, verschiebbar. In dieser Stellung können die Bandsägen 8 bei einer Unterbrechung des Stranggusses gewechselt werden.

Fig. 3 zeigt einen Schnitt durch die Trennfuge einer Bramme 2 mit im Schnitt befindlichem Bandsägeblatt 8 der in Vorschubrichtung V der Bramme vordersten Bandsägemaschine 3.

Das Bandsägeblatt 8 ist an beiden Kanten mit gleichartigen Verzahnungen 8a versehen. Da sich ein in der Trennfuge 2a steckengebliebenes, abgerissenes Ende 8' unter dem Vorschub der Bramme 2 dem Bandsägeblatt 8 mit umgekehrter Schneidrichtung B nähert, wird es von der Verzahnung dieses Blattes beim Aufeinandertreffen der entgegengesetzt gerichteten Verzahnungen 8a aus der Trennfuge 2a herausgerissen.

Es versteht sich, daß unter Verwendung einer gemeinsamen Grundplatte 11 für alle Bandsägemaschinen 3 diese Bandsägemaschinen alle in fluchtender Lage zueinander auf der gemeinsamen Grundplatte 11 angeordnet sind, so daß bei vorgeschobener Wirklage der Bandsägemaschinen alle abwärts gerichteten Trums der Bandsägeblätter 8 in der Schnittlinie 10 (Fig. 2) liegen.

## Patentansprüche

1. Anlage zum Längsteilen einer aus einer Stranggießanlage austretenden und auf einem Rollgang ablaufenden heißen Bramme, gekennzeichnet durch zwei oder mehr in Vorschubrichtung der Bramme (2) hintereinander angeordnete Bandsägemaschinen (3), jeweils mit einem C-förmigen, einhüftigen Ständer (4), an dem mindestens drei Bandsäge-Führungsrollen (5, 6, 7) fliegend gelagert sind, von denen eine angetrieben ist, und quer zum Brammenvorschub (V) verlaufende Führungen (16) für jeden Ständer, die so lang ausgeführt sind, daß die Bandsägemaschinen zum Sägenwechsel bis außerhalb des Rollganges (1) verschiebbar sind.

2. Anlage nach Anspruch 2, dadurch gekennzeichnet, daß die Ständer (4) der Bandsägemaschinen (3) eine gemeinsame Grundplatte (11) haben.

3. Anlage nach Anspruch 1 oder 2, dadurch gekennzeichnet, daß die Bandsägeblätter (8) an beiden Kanten gleichartige Verzahnungen (8a) tragen und jede Bandsägemaschine (3) in umgekehrter Richtung angetrieben ist wie die unmittelbar vorhergehende Bandsägemaschine.

## Claims

1. Installation to divide a hot slab longitudinally, discharged by a continuous casting machine and running off on a roller table, characterized in that two or more band sawing machines (3) are arranged one behind the other in slab feed direction (2), each equipped with a single-saddle C-shaped frame (4) on which at least three band saw guide rollers (5, 6, 7) are arranged in overhung position, one of which is power-driven, and equipped with guides (16) for each frame which are arranged transverse to the slab feed direction (V) and of such length as to enable shifting of the saws to a position outside the limits of the roller table (1).

2. Installation in accordance with claim 2, characterized in that the frames (4) of the band sawing machines (3) have a common base plate (11).

3. Installation in accordance with claim 1 or 2, characterized in that the band saw blades (8) have uniform tooth systems (8a) and each band sawing machine (3) is driven in reverse sequence as compared to the band sawing machine arranged immediately ahead.

## Revendications

1. Dispositif pour la division longitudinale d'une brame chaude sortant d'un appareil à coulée continue et qui se déplace sur un transporteur à rouleaux caractérisé en ce qu'il comprend au moins deux machines à lame de scie (3) placées les unes après les autres dans le sens de déplacement de la brame (2), chacune de ces machines comportant un support (4) à un bras en forme de C, sur lequel sont montés au moins trois cylindres de guidage (5, 6, 7) d'une lame de scie, dont l'un seulement est entraîné, les deux autres étant fous, ces supports reposant sur des glissières (16) placées transversalement par rapport à la direction (V) d'avancement de la brame et qui sont d'une longueur suffisante pour que les machines de division à lame de scie puissent coulisser, en vue du remplacement des lames de scie, jusqu'en dehors du transporteur à rouleaux (1).

2. Dispositif suivant la revendication 1 caractérisé en ce que tous les supports (4) des machines à lame de scie sont montés sur une plaque de base (11) commune.

3. Dispositif suivant l'une quelconque des revendications 1 et 2 caractérisé en ce que les lames de scie (8) sont pourvues, sur leurs deux tranchants, de dentures (8a) du même type, chaque machine à lame de scie étant entraînée en sens inverse par rapport à la machine à lame de scie (3) qui la précéde immédiatement.

Fig. 1

Fig. 3

5

Fig. 2